# EUROPEAN PATENT APPLICATION

(11) **EP 2 713 325 A1**
(43) Date of publication of application: **02.04.2014**
(21) Application number: 13179275.6
(22) Date of filing: 05.08.2013
(51) Int. Cl.: G06Q 10/10

(54) **Mail creation supporting device and method**

(30) Priority: 27.09.2012 JP 2012214833
(71) Applicant: FUJITSU LIMITED, Kawasaki-shi, Kanagawa 211-8588 (JP)
(72) Inventor: Kato, Hideyuki, Kanagawa, 211-8588 (JP); Akama, Katsuaki, Kanagawa, 211-8588 (JP); Tanba, Naoto, Kanagawa, 211-8588 (JP)
(74) Representative: Keltsch, Ulrike

(57) **Abstract**

A mail creation supporting device includes a processor and a memory, wherein the processor is configured to execute a process including acquiring attribute information stored in the memory to correspond to a destination of an electronic mail message in process of creation and associated with the destination, specifying a space area in a text input area of the electronic mail message, and displaying the attribute information on the specified space area.

## Description

### FIELD

A certain aspect of the embodiments discussed herein relates to a mail creation supporting device, a mail creation supporting method, and a non-transient computer-readable recording medium.

### BACKGROUND

Similar to a wrong call, a wrong transmission of an electronic mail message could also occur. A wrong transmission described herein is to transmit a mail message to a destination different from an intended destination due to an improper input of the destination.

A mail creation supporting screen 600 with an area for displaying a photograph of a face of a person to be transmitted is illustrated in FIG. 11 of Japanese Laid-Open Patent Application No. 2005-352984.

However, even if a screen having a plurality of areas such as the above-mentioned mail creation supporting screen 600 is displayed in an instrument such as a mobile phone or a smartphone, it is expected that it would be difficult to view displayed contents of each area.

### SUMMARY

Accordingly, it is an object of one aspect of the embodiment to reduce a likelihood of a wrong transmission of an electronic mail message.

According to an aspect of the embodiments, a mail creation supporting device includes a processor and a memory, wherein the processor is configured to execute a process including acquiring attribute information stored in a memory to correspond to a destination of an electronic mail message in process of creation and associated with the destination, specifying a space area in a text input area of the electronic mail message, and displaying the attribute information on the specified space area.

### BRIEF DESCRIPTION OF THE DRAWING(S)

FIG. 1 is a diagram illustrating a hardware configuration of a mobile terminal in the present embodiment;
FIG. 2 is a diagram illustrating an example of a functional configuration of a mobile terminal in the present embodiment;
FIG. 3 is a flowchart illustrating one example of a procedure of a mail creation supporting process to be executed by a mobile terminal;
FIG. 4 is a flowchart illustrating one example of a procedure of a space area specifying process;
FIG. 5 is a diagram illustrating an example of an input on a text input area and an example of a state of a line information storage part;
FIG. 6 is a flowchart illustrating one example of a procedure of an attribute display area extracting process;
FIG. 7 is a diagram illustrating an example of arrangement of an attribute display area;
FIG. 8 is a diagram illustrating one example of a procedure of an attribute displaying process; and
FIG. 9 is a diagram illustrating one example of a display form of attribute information.

### DESCRIPTION OF EMBODIMENT(S)

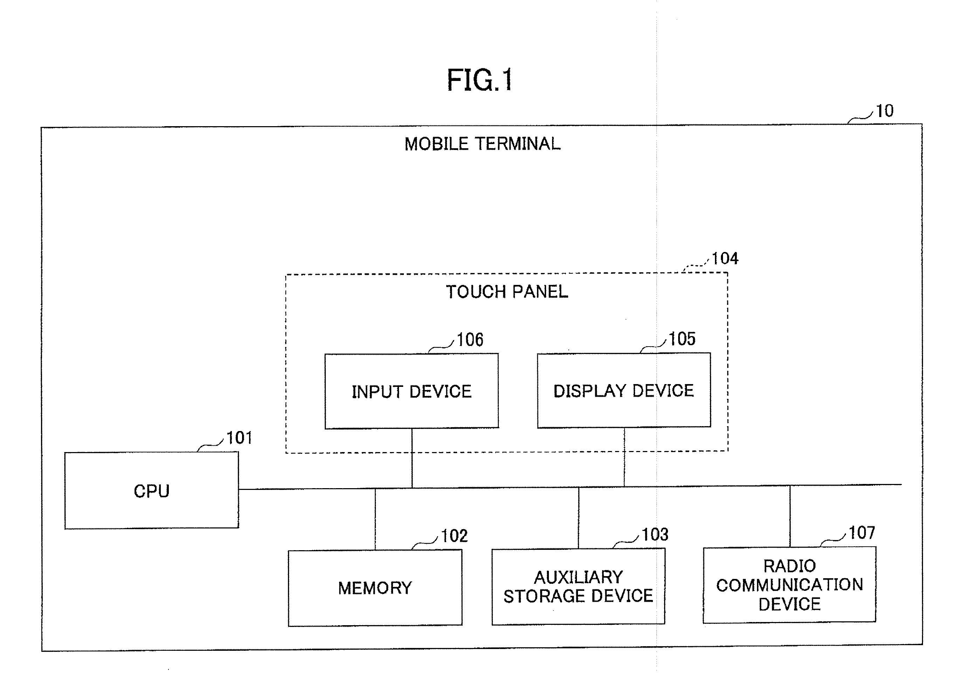

Embodiments of the present invention will be described with reference to the drawings below. FIG. 1 is a diagram illustrating an example of a hardware configuration of a mobile terminal in the present embodiment. In FIG. 1, a mobile terminal 10 includes a central processing unit (CPU) 101, a memory 102, an auxiliary storage device 103, a touch panel 104, a radio communication device 107, and the like.

The auxiliary storage device 103 stores a program installed in the mobile terminal 10 or the like. The memory 102 reads from the auxiliary storage device 103 and stores therein a program when an instruction for starting a program is provided. The CPU 101 realized a function relating to the mobile terminal 10 in accordance with a program stored in the memory 102.

The touch panel 104 is an electronic component with both an input function and a display function and executes display of information, reception of an input from a user, or the like. The touch panel 104 includes a display device 105, an input device 106, and the like.

The display device 105 is a liquid crystal display or the like and has a display function of the touch panel 104. The input device 106 is an electronic component that includes a sensor for detecting contacting of a contact object with the display device 105. A method for detecting contacting of a contact object may be any publicly-known method such as an electrostatic method, a resistance film method or an optical method. Additionally, a contact object refers to an object that contacts the touch panel 104. For one example of such an object, it is possible to provide a finger of a user, a dedicated or general-purpose pen, or the like.

The radio communication device 107 is an electronic component, such as an antenna, that is needed to execute communication in a wireless Local Area Network (LAN), a mobile communication network, or the like.

Additionally, for one example of the mobile terminal 10, it is possible to provide a smartphone, a tablet-type terminal, or the like. Furthermore, a mobile phone having a button or the like (a feature phone) instead of the input device 106 may be utilized as the mobile terminal 10.

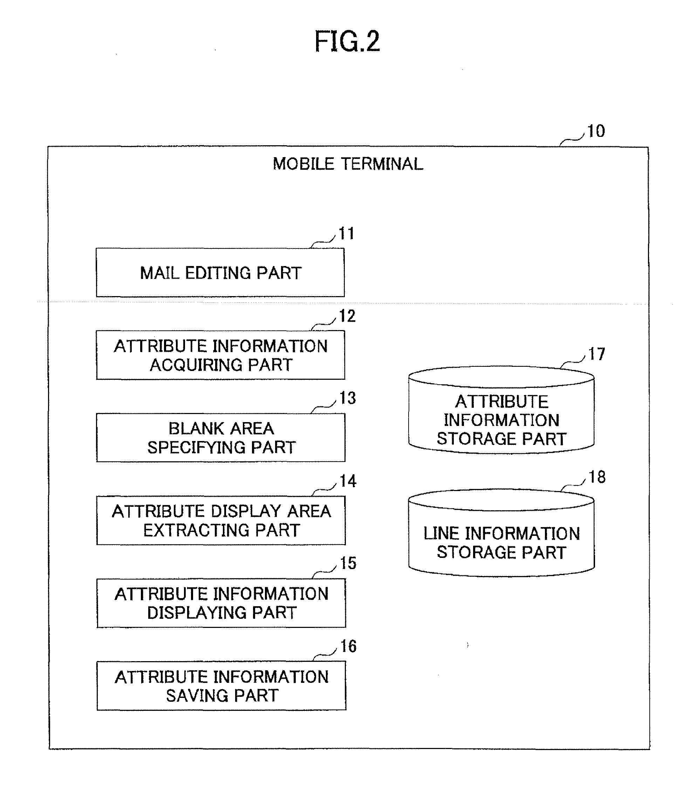

FIG. 2 is a diagram illustrating an example of a functional configuration of a mobile terminal in the present embodiment. In FIG. 2, the mobile terminal 10 includes a mail editing part 11, an attribute information acquiring part 12, a blank area specifying part 13, an attribute display area extracting part 14, an attribute information displaying part 15, an attribute information saving part 16, and the like. Each of these parts is realized by a process that a program installed in the mobile terminal 10 causes the CPU 101 to execute. The mobile terminal 10 also includes an attribute information storage part 17, a line information storage part 18, and the like. Each of these storage parts is realized by using the auxiliary storage device 103, the memory 102, or the like.

The mail editing part 11 displays an editing screen of an electronic mail message (that will be referred to as a "mail message" simply below) on the display device 105 and supports creation and editing of a mail message. An editing screen includes a text input area that is an area for inputting text of a mail message.

The attribute information acquiring part 12 acquires attribute information of a person associated with a mail address set as a destination of a mail message (that will be refereed to as a "destination address") from the attribute information storage part 17. The attribute information storage part 17 stores, for each mail address, attribute information of a person associated with the mail address. For example, a telephone directory included in a smartphone, a mobile phone or the like may be used as the attribute information storage part 17. In other words, information recorded in a telephone directory may be provided as attribute information.

The blank area specifying part 13 analyzes each line in a text input area and specifies a portion with no inputted character for each line. A result of analysis by the blank area specifying part 13 is stored in the line information storage part 18.

The attribute display area extracting part 14 extracts, from a text input area, an area for displaying attribute information acquired by the attribute information acquiring part 12, by referring to the line information storage part 18.

The attribute information displaying part 15 displays attribute information on an area extracted by the attribute display area extracting part 14.

The attribute information saving part 16 saves displayed attribute information in a case where the attribute information overlaps a current input position (input line). One example of a specific mode of saving will be described below.

A procedure of a process to be executed by the mobile terminal 10 will be described below.

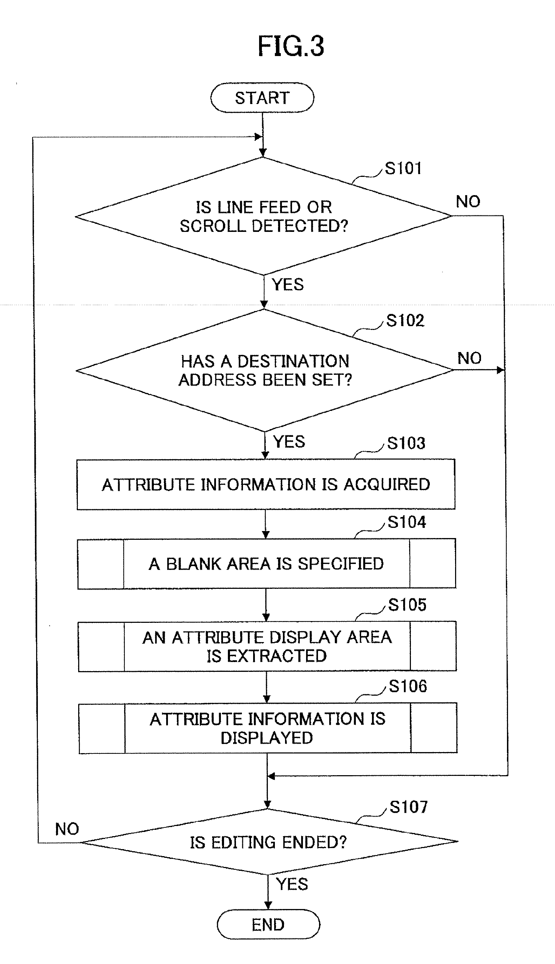

FIG. 3 is a flowchart for illustrating one example of a procedure of a mail creation supporting process to be executed by a mobile terminal.

When an input of text is conducted in a text input area and the mail editing part 11 detects execution of line feed or execution of scroll (Yes at S101), going to step S102 is executed. Execution of line feed is also detected in a case where a cursor position is moved to a next line as well as a case where a line feed code is inputted. Movement of a cursor position is executed, for example, in a case where an input of characters for one sentence is executed on a line in a text input area. Furthermore, scroll is also executed in a case where line feed is conducted at a last line in a text input area as well as a case where an explicit instruction of scroll is inputted.

At step S102, the attribute information acquiring part 12 determines whether a destination address has been set for a mail in process of creation. When a destination address has been set (Yes at S102), the attribute information acquiring part 12 acquires attribute information associated with a destination address and stored in the attribute information storage part 17 (S103). It is desirable for attribute information to be information capable of readily determining a person corresponding to a destination address. For example, it is possible to provide image data of a photograph such as a photograph of a face of such a person, a full name of such a person, a nickname of such a person, or other information associated with such a person, as one example of attribute information. A combination of pieces of attribute information may be acquired.

Subsequently, the blank area specifying part 13 executes a blank area specifying process (S104). In a blank area specifying process, a blank area in a text input area is specified. A blank area is an area with no character having been inputted therein.

Subsequently, the attribute display area extracting part 14 extracts an area capable of displaying attribute information (that will be referred to as an "attribute display area", below) from a blank area (S105). Subsequently, the attribute information displaying part 15 executes an attribute information displaying process (S106). As a result, attribute information is displayed in an attribute display area.

Steps S101 - S106 are repeatedly executed until editing of text in a text input area is ended (S107). As an instruction for ending editing of text is inputted (Yes at S107), a process of FIG. 3 is ended.

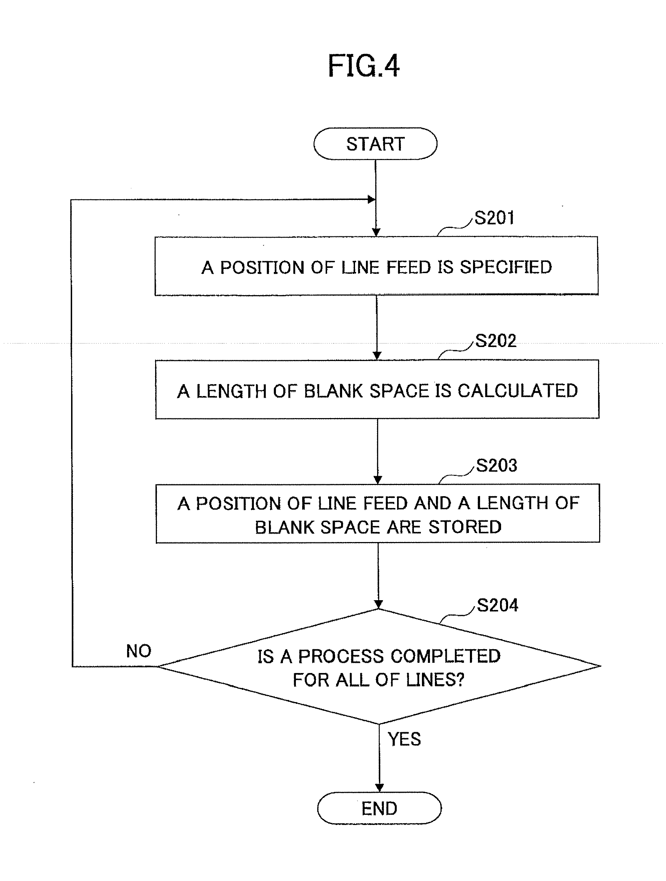

Next, the details of step S107 will be described. FIG. 4 is a flowchart for illustrating one example of a procedure of a blank area specifying process. Steps S201 - S203 are executed for each line displayed in a text input area.

At step S201, the blank area specifying part 13 specifies a position of line feed for a line as a processing object (that will be referred to as an "object line", below) (S201). A position of line feed is a position of an inputted line feed code or a right edge of an object line. For example, when a character has been inputted without conducting line feed from an object line to a next line, a position of line feed of an object line is a right edge of the object line. Furthermore, when a character has not yet been inputted on an object line, a position of line feed is provided as "none".

Subsequently, the blank area specifying part 13 calculates a length of blank space of an object line (S202). A length of blank space indicates a length from a position of line feed to a right edge of an object line. Therefore, a length of blank space is calculated by subtracting a value of an X-coordinate of a position of line feed from a value of an X-coordinate of a right edge. Additionally, when a position of line feed is "none", a length of blank space is a width of one line.

Subsequently, the blank area specifying part 13 stores a position of line feed and a length of blank space of an object line in the line information storage part 18 to correspond thereto (S203).

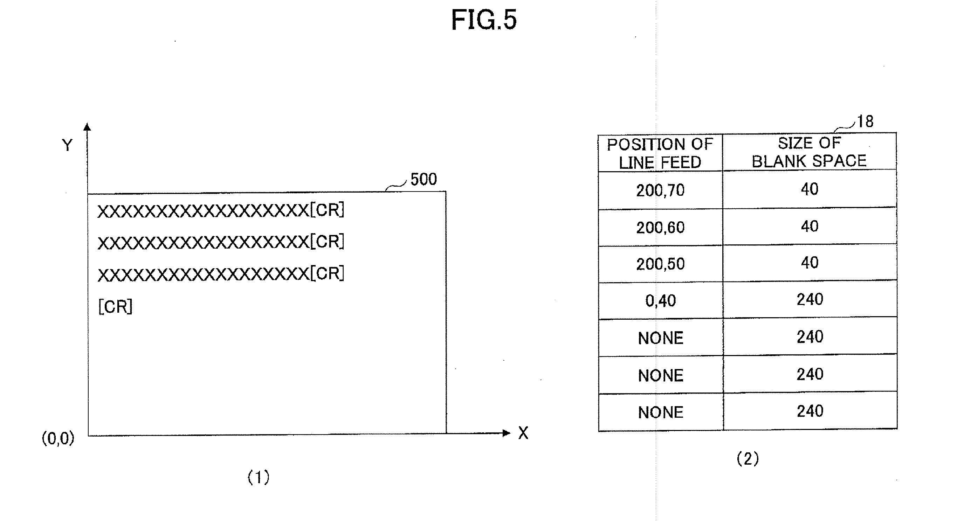

When steps S201 - S203 are executed for all of lines that are being displayed (Yes at S204), a process of FIG. 4 is ended. As a result, the line information storage part 18 is, for example, at a state as illustrated in FIG. 5.

FIG. 5 is a diagram illustrating an example of an input in a text input area and an example of a state of a line information storage part. In FIG. 5, (1) illustrates an example of an input in a text input area 500. Furthermore, (2) illustrates an example of a state of the line information storage part 18 that corresponds to the example of an input as illustrated in (1).

The line information storage part 18 stores a position of line feed, a length of blank space, and the like, for each line from a first line to a last line that are being displayed in the text input area 500. In an example of FIG. 5, the line information storage part 18 includes seven records. Therefore, the text input area 500 includes a displayed area for seven lines in a longitudinal direction.

The meanings of a position of line feed and a length of blank space are as described above. Additionally, a value of a coordinate of a position of line feed and a length of blank space in the present embodiment are based on a coordinate system as illustrated in (1), wherein a lower-left apex of the text input area 500 is an origin (0,0) and a unit is provided as a dot. Such a coordinate system will be referred to as a "text input area coordinate system" below. However, another coordinate system may be used.

Additionally, a blank area is an area formed by joining areas of respective lines that relate to a length(s) of blank space in a longitudinal direction.

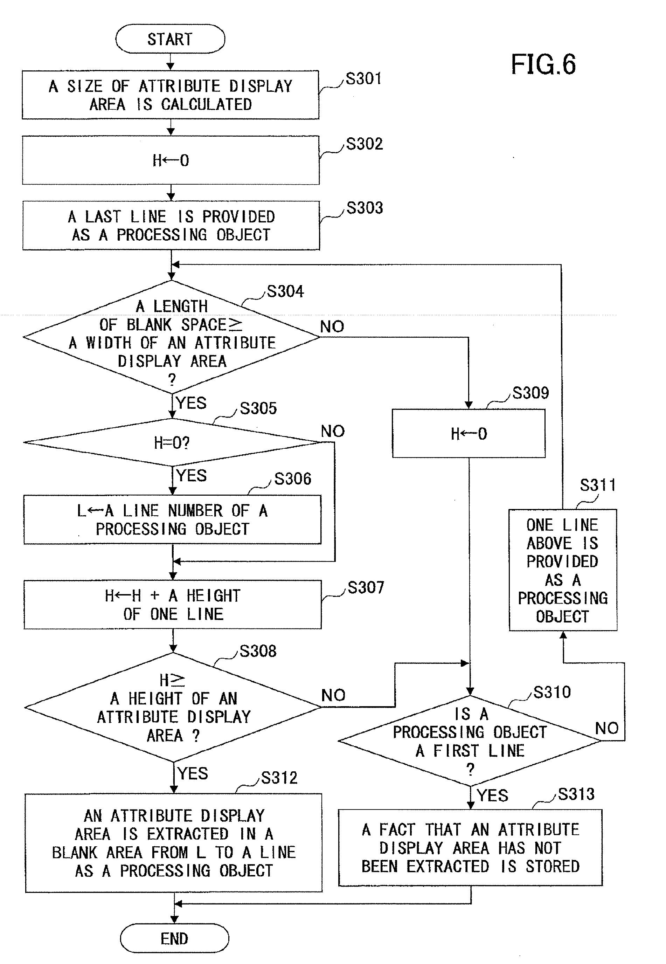

Next, the details of step S105 in FIG. 3 will be described. FIG. 6 is a flowchart for illustrating one example of a procedure of an attribute display area extracting process.

At step S301, the attribute display area extracting part 14 calculates a size of an attribute display area (height and width) (S301). Such a size may be calculated based on displayed attribute information. For example, when image data of a photograph of a person associated with a destination address are provided as attribute information, a size of such image data may be provided as a size of an attribute display area. When a plurality of destinations are specified, a size of longitudinally or transversely arranged image data for each destination may be provided as a size of an attribute display area. When a character string is attribute information, a size of an attribute display area may be calculated based on the number of characters, a layout of a character string, or the like.

At step S302 and later, a process is executed for specifying a position for arrangement of an attribute display area in a blank area. That is, a range capable of containing an attribute display area in a blank area is specified.

At step S302, the attribute display area extracting part 14 initialize a value of a variable H to be zero. Variable H is for storing heights of continuous lines extracted from the text input area 500 as lines capable of being an attribute display area. A value of variable H will be referred to as an "extraction height H" below. A unit of extraction height H is a unit of a coordinate system of a text input area (dot).

Subsequently, the attribute display area extracting part 14 provides that a last line in the text input area 500 is a processing object (S303). A line provided as a processing object will be referred to as an "object line" below. Subsequently, the attribute display area extracting part 14 determines whether a length of blank space of a record associated with an object line in the line information storage part 18 is greater than or equal to a width of an attribute display area (S304). When such a length of blank space is greater than or equal to an attribute display area (Yes at S304), the attribute display area extracting part 14 determines whether an extracted height H is zero (S305). When an extracted height H is zero (Yes at S305), the attribute display area extracting part 14 substitutes a line number of an object line for a variable L (S306). Additionally, a line number refers to a line number wherein a first line in the text input area 500 is provided as 1, and is identical to a sequential number of a record(s) in the line information storage part 18. A variable L is for storing an end line in an attribute display area. A value of variable L will be referred to as an "end line L" below.

Subsequent to a case of "No" at step S305 or after step S306, the attribute display area extracting part 14 provides a value wherein a height of one line is added to an extracted height H, as a new extracted height H (S307). Subsequently, the attribute display area extracting part 14 determines whether an extracted height H is greater than or equal to a height of an attribute display area (S308). When an extracted height H is less than a height of an attribute display area (No at S308), the attribute display area extracting part 14 determines whether an object line is a first line (S310). When an object line is not a first line (No at S310), the attribute display area extracting part 14 repeats step S304 and later while one line above an objection line is provided as an object line (S311).

When an extracted height H is greater than or equal to a height of an attribute display area (Yes at S308) in a process for repeating step S304 and later, the attribute display area extracting part 14 extracts an attribute display area from a blank area from an end line L to an object line (S312). For example, a value of a coordinate of a lower left apex of such a blank area is provided as a value of a coordinate of a lower left apex of an attribute display area. Furthermore, based on such a value of a coordinate and a height and width of an attribute display area, a value of a coordinate of an upper right apex of an attribute display area is calculated. A value of a coordinate of a lower left apex and a value of a coordinate of an upper right apex of an attribute display area are stored in, for example, the memory 102. Additionally, an attribute display area may be arranged at another position in such a blank area.

On the other hand, when a length of blank space of an objection line is less than a width of an attribute display area at step S304 (No at S304), the attribute display area extracting part 14 initializes an extracted height H to be zero (S309). That is because a line with a length of blank space that is less than a width of an attribute display area is detected before a blank area having a height capable of containing an attribute display area is extracted, so that exploration of a blank area capable of containing an attribute display area is restarted from a next line.

Furthermore, when an object line is a first line at step S310 (Yes at S310), the attribute display area extracting part 14 stores information indicating that an attribute display area has not been extracted, in the memory 102 (S313). Additionally, an attribute display area having not been extracted means that a position of arrangement of an attribute display area could not be secured.

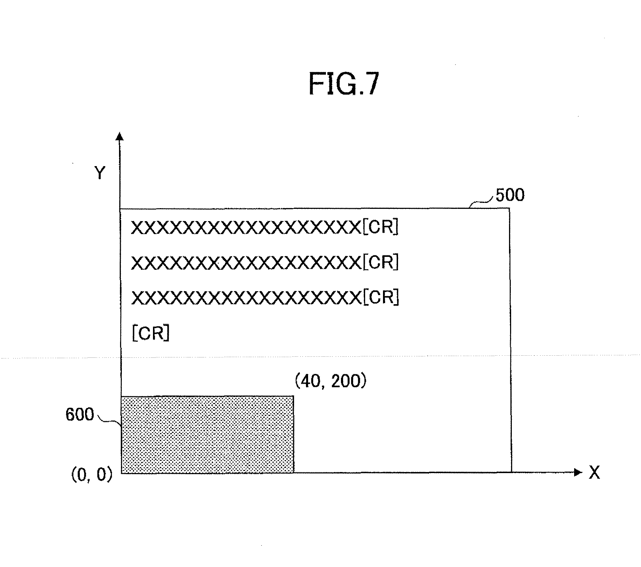

For example, when a height and a width of an attribute display area is 40 and 200, respectively and a state of an input for the text input area is as illustrated in FIG. 5, an attribute display area is arranged, for example, as illustrated in FIG. 7.

FIG. 7 is a diagram illustrating an example of arrangement of an attribute display area. In FIG. 7, an attribute display area 600 is such that a value of a coordinate of a lower left apex is (0, 0) and a value of a coordinate of an upper right apex is (40, 200).

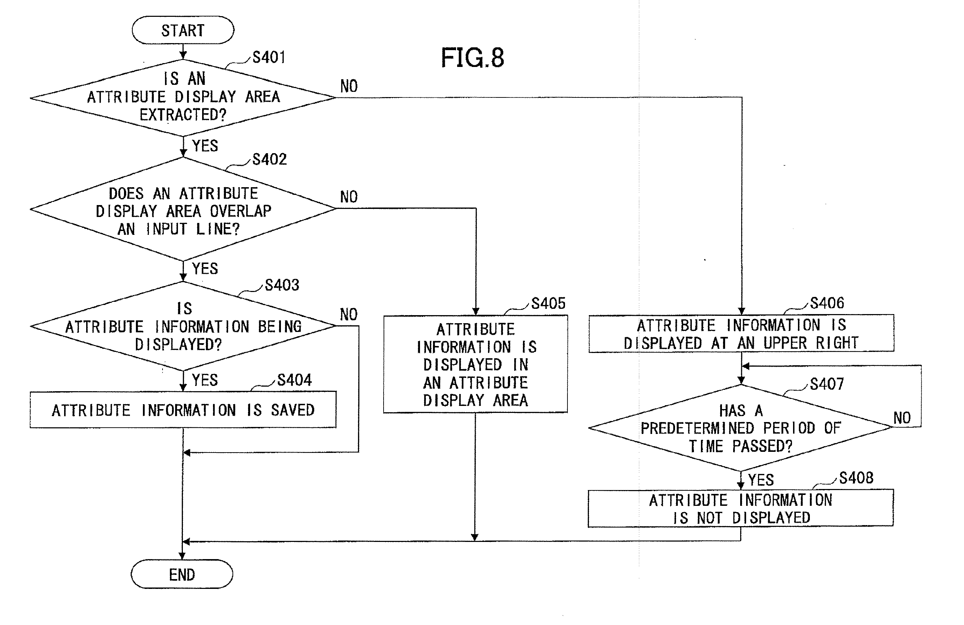

Next, the details of step S103 in FIG. 3 will be described. FIG. 8 is a diagram illustrating one example of a procedure of an attribute display process.

At step S401, the attribute information display part 15 determines whether an attribute display area has been extracted. It is possible to execute such a determination based on whether a value of a coordinate of an attribute display area is stored in the memory 102.

When an attribute display area is extracted (Yes at S401), the attribute information saving part 16 determines whether an attribute display area overlaps at least a portion of a currently inputting line (S402). A currently inputting line refers to a line with a cursor being currently present thereon.

When an attribute display area overlaps at least a portion of a currently inputting line (Yes at S402), the attribute information saving part 16 determines whether attribute information is being displayed (S403). When attribute information is being displayed (Yes at S403), the attribute information saving part 16 saves attribute information that is being displayed (S404). For one example of a saving mode, it is possible to provide deletion (hiding), reduction, movement of a display position, or the like, of attribute information. It is sufficient for saving to be a process that avoids an overlap between attribute information and an inputted line. Additionally, when attribute information is not displayed (No at S403), no saving may be executed.

Furthermore, when an attribute display area does not overlap a currently inputting line (No at S402), the attribute information display part 15 displays attribute information acquired at step S103 in an attribute display area (S405). Herein, when attribute information has already been displayed and positions of attribute display areas are identical, nothing may be executed. Furthermore, when attribute information has already been displayed and positions of attribute information areas are different, it is sufficient to first hide attribute information and subsequently display attribute information in a new attribute information area.

On the other hand, when an attribute display area has not been extracted (No at S401), the attribute information displaying part 15 secures an attribute display area in such a manner that an upper right apex of an attribute display area coincides with an upper right apex of the text input area 500, and displays attribute information in such an attribute display area (S406). That is, attribute information is displayed in an upper right portion of the text input area 500. The reason why attribute information is displayed in an upper right portion is that it is considered that a cursor is preset below the text input area 500 on a condition that an attribute display area has not been extracted. Therefore, if it is possible to avoid an overlap between an inputted line and attribute information, attribute information may be displayed at another position.

Subsequently, the attribute information displaying part 15 waits until a predetermined period of time has passed (S407). A predetermined period of time is, for example, one - two seconds or the like, or it is sufficient to be a period of time in such a manner that it is possible for a user to recognize displayed attribute information. After a predetermined period of time has passed (Yes at S407), the attribute information displaying part 15 hides attribute information (S408). That is, it is highly likely for attribute information displayed at step S406 to overlap a portion of text. Accordingly, attribute information is deleted in order to avoid degradation of operability. However, a state of display of attribute information may be continued.

One example of a display mode of attribute information will be illustrated that is attained by executing a procedure described above.

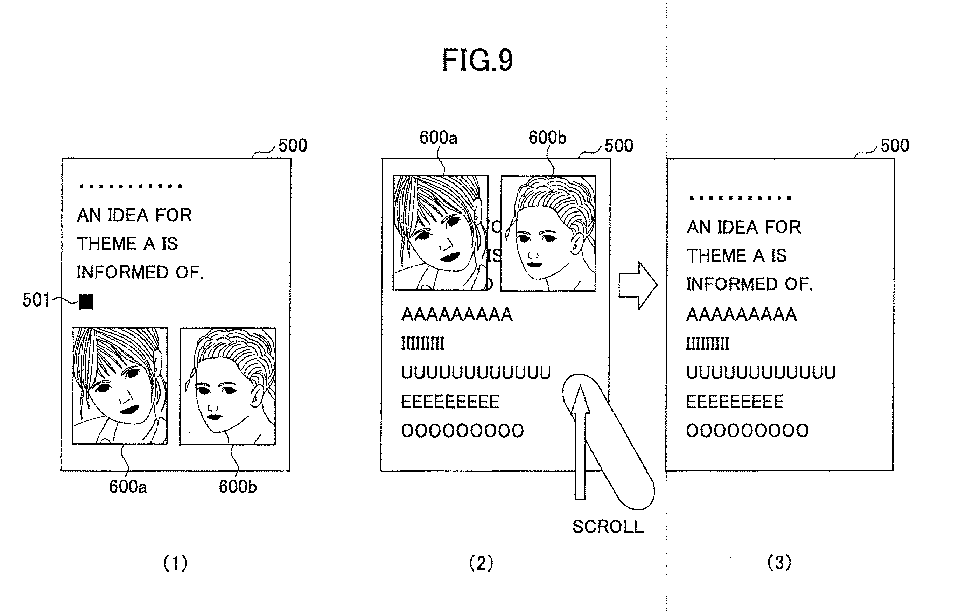

FIG. 9 is a diagram illustrating one example of a display mode of attribute information.
As illustrated in (1) of FIG. 9, while an inputted line that includes a cursor 501 is provided at a position capable of securing an attribute display area, images 600a and 600b that are examples of attribute information are displayed at a lower side of the text display area 500. For example, if a user conducts line feed in such a situation, at least a portion of an inputted line overlaps the images 600a and 600b. Therefore, the images 600a and 600b are saved.

Afterwards, for example, when scroll is conducted as illustrated in (2), the saved images 600a and 600b are displayed above the text input area 500. When a predetermined period of time has passed in such a situation, the images 600a and 600b are hidden as illustrated in (3).

As described above, attribute information associated with a destination address is displayed in the text input area 500 in the present embodiment. Therefore, it is possible for a user to readily confirm right or wrong of a destination address based on attribute information, even for an instrument with a small screen such as the mobile terminal 10. As a result, it is possible to reduce a likelihood of wrong transmission of a mail message to a wrong destination.

Furthermore, displayed attribute information is saved in a case where an inputted line overlaps therewith. Therefore, it is possible to suppress degradation of operability caused by displaying attribute information on the text input area 500.

Furthermore, attribute information is displayed for each scroll for a short period of time even after attribute information is saved, so that it is possible for a user to confirm right or wrong of a destination sequentially.

Additionally, it is also possible to apply the present embodiment to an information processing device having a screen larger than that of the mobile terminal 10, such as a general-purpose Personal Computer (PC).

Additionally, the attribute information acquiring part 12 is one example of an acquisition part in the present embodiment. The blank area specifying part 13 is one example of a specification part. The attribute information displaying part 15 is one example of a display part. The attribute information saving part 16 is one example of a saving part.

According to one aspect of the embodiment, it is possible to reduce a likelihood of a wrong transmission of an electronic mail message.

## Claims

1. A mail creation supporting device comprising:
an acquisition part configured to acquire attribute information stored in a storage part to correspond to a destination of an electronic mail message in process of creation and associated with the destination;
a specification part configured to specify a space area in a text input area of the electronic mail message; and
a display part configured to display the attribute information on the specified space area.

2. The mail creation supporting device as claimed in claim 1, further comprising a saving part configured to save the attribute information in a case where an input position in the text input area overlaps the displayed attribute information.

3. The mail creation supporting device as claimed in claim 2, wherein the saving part saves the attribute information depending on a change of a line at the input position in a case where the displayed attribute information is overlapped therewith.

4. The mail creation supporting device as claimed in claim 2 or 3, wherein the display part displays the saved attribute information in an area configured not to overlap the input position in the text input area in a case where the text input area is scrolled.

5. A mail creation supporting method for executing a process by a computer, the process comprising:
acquiring attribute information stored in a storage part to correspond to a destination of an electronic mail message in process of creation and associated with the destination;
specifying a space area in a text input area of the electronic mail message; and
displaying the attribute information on the specified space area.

6. A program for causing a computer to execute a process comprising:
acquiring attribute information stored in a storage part to correspond to a destination of an electronic mail message in process of creation and associated with the destination;
specifying a space area in a text input area of the electronic mail message; and
displaying the attribute information on the specified space area.
